# EUROPEAN PATENT APPLICATION

(11) **EP 4 753 231 A1**
(43) Date of publication of application: **03.06.2026**
(21) Application number: 24877478.8
(22) Date of filing: 07.10.2024
(51) Int. Cl.: H04L 65/1096, H04L 65/1069, H04L 65/1101, H04L 65/1046, H04M 3/493, H04M 7/00

(54) **COMMUNICATION METHOD BETWEEN VOICE AGENTS AND ELECTRONIC DEVICE THEREFOR**

(30) Priority: 13.10.2023 KR 20230137017; 17.11.2023 KR 20230159739
(71) Applicant: Samsung Electronics Co., Ltd., Suwon-si, Gyeonggi-do 16677 (KR)
(72) Inventor: KIM, Sangheon, Suwon-si Gyeonggi-do 16677 (KR); KIM, Dukhyun, Suwon-si Gyeonggi-do 16677 (KR); KIM, Junsung, Suwon-si Gyeonggi-do 16677 (KR); SON, Dongil, Suwon-si Gyeonggi-do 16677 (KR); SONG, Yoechan, Suwon-si Gyeonggi-do 16677 (KR); LIM, Yeunwook, Suwon-si Gyeonggi-do 16677 (KR)
(74) Representative: Gulde & Partner
(86) International application number: PCT/KR2024/015212
(87) International publication number: WO 2025/079940

(57) **Abstract**

An electronic device according to an embodiment disclosed in the present document may comprise: a communication circuit; a memory for storing instructions; and at least one processor electrically connected to the communication circuit and the memory. The instructions, when executed by the at least one processor individually or collectively, may cause the at least one processor of the electronic device to: obtain a user input; identify a task on the basis of the user input; transmit an establishment request of a first session for a voice call to an external electronic device to perform the task; receive a response from the external electronic device; determine whether a responder of the voice call is a voice agent based on machine learning on the basis of the response; and transmit data information including information associated with the task to the external electronic device on the basis of the determination that the responder is the voice agent.

## Description

### [Technical Field]

The disclosure relates to a method for communication between voice agents and an electronic device therefor..

### [Background Art]

An electronic device may receive user input (e.g., voice input) through a voice agent and exchange information with an external electronic device based on the voice input.

Meanwhile, an automatic response system (ARS) service refers to a service that provides guidance to a user by providing pre-recorded voice information to the user when the user accesses the system, and an interactive voice response (IVR) service refers to a service that provides customized information to a customer based on input information because the information input by the customer can be sent to a counselor or database server depending on the purpose of use.

The above information may be provided as a related art for the purpose of aiding understanding of the disclosure. No determination has been made, and no assertion is made, as to whether any of the above might be applicable as prior art with regard to the disclosure.

### [Disclosure]

### [Technical Solution]

Aspects of the disclosure are to address at least the above-mentioned problems and/or disadvantages and to provide at least the advantages described below. Accordingly, an aspect of the disclosure is to provide a method for communication between voice agents and an electronic device therefor.

Additional aspects will be set forth in part in the description which follows and, in part, will be apparent from the description, or may be learned by practice of the presented embodiments.

In accordance with an aspect of the disclosure, an electronic device is provided. The electronic device includes a communication circuit, memory storing instructions, and at least one processor electrically connected to the communication circuit and the memory, wherein the instructions, when executed by the at least one processor individually or collectively, cause the electronic device to acquire a user input, identify a task based on the user input, transmit a request to establish a first session for a voice call to an external electronic device in order to perform the task, receive a response from the external electronic device, determine, based on the response, whether a responder of the voice call is a voice agent based on machine learning, and transmit data information including information associated with the task to the external electronic device based on the determination that the responder is the voice agent.

In accordance with another aspect of the disclosure, a method is provided. The method includes acquiring a user input, identifying a task based on the user input, transmitting a request to establish a first session for a voice call to an external electronic device in order to perform the task, receiving a response from the external electronic device, determining, based on the response, whether a responder of the voice call is a voice agent based on machine learning, and transmitting data information including information associated with the task to the external electronic device based on the determination that the responder is the voice agent.

In accordance with another aspect of the disclosure, one or more non-transitory computer-readable storage media storing instructions, when executed by at least one processor of an electronic device individually or collectively, cause the electronic device to perform operations are provided. The operations include acquiring a user input, identifying a task based on the user input, transmitting a request to establish a first session for a voice call to an external electronic device in order to perform the task, receiving a response from the external electronic device, determining, based on the response, whether a responder of the voice call is a voice agent based on machine learning, and transmitting data information including information associated with the task to the external electronic device based on the determination that the responder is the voice agent.

Other aspects, advantages, and salient features of the disclosure will become apparent to those skilled in the art from the following detailed description, which, taken in conjunction with the annexed drawings, discloses various embodiments of the disclosure.

### [Description of Drawings]

The above and other aspects, features, and advantages of certain embodiments of the disclosure will be more apparent from the following description taken in conjunction with the accompanying drawings, in which:
FIG. 1 is a diagram illustrating a system in which an electronic device communicates with an external electronic device, according to an embodiment of the disclosure;
FIG. 2 is a block diagram illustrating a configuration of an electronic device, according to an embodiment of the disclosure;
FIG. 3 is a flowchart of a method in which an electronic device communicates with an external electronic device, according to an embodiment of the disclosure;
FIG. 4 is a flow diagram of a method in which an electronic device communicates with an external electronic device, according to an embodiment of the disclosure;
FIG. 5 is a signal flow diagram illustrating a method in which an electronic device and an external electronic device communicates with each other, according to an embodiment of the disclosure;
FIG. 6 is a flowchart of a method in which an electronic device communicates with a voice agent of an external electronic device, according to an embodiment of the disclosure;
FIG. 7 is a flowchart of a detailed method in which an electronic device communicates with a voice agent of an external electronic device, according to an embodiment of the disclosure;
FIG. 8 is a diagram of an interface displayed when a voice agent of an electronic device requests an external electronic device to set up a first session for voice call communication, according to an embodiment of the disclosure;
FIG. 9 is a flow diagram in which an electronic device connects an external electronic device with a voice call communication, according to an embodiment of the disclosure;
FIG. 10 is a block diagram of an electronic device in a network environment, according to various embodiments of the disclosure;
FIG. 11 is a block diagram illustrating an integrated intelligence system according to an embodiment of the disclosure;
FIG. 12 is a diagram illustrating a form in which relationship information between a concept and an action is stored in a database, according to an embodiment of the disclosure; and
FIG. 13 is a diagram illustrating a screen on which a user terminal processes voice input received through an intelligent app according to an embodiment of the disclosure.

Throughout the drawings, it should be noted that like reference numbers are used to depict the same or similar elements, features, and structures.

### [Mode for Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It should be appreciated that the blocks in each flowchart and combinations of the flowcharts may be performed by one or more computer programs which include instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g. a central processing unit (CPU)), a communication processor (CP, e.g., a modem), a graphics processing unit (GPU), a neural processing unit (NPU) (e.g., an artificial intelligence (AI) chip), a Wi-Fi chip, a Bluetooth^{®} chip, a global positioning system (GPS) chip, a near field communication (NFC) chip, connectivity chips, a sensor controller, a touch controller, a finger-print sensor controller, a display driver integrated circuit (IC), an audio CODEC chip, a universal serial bus (USB) controller, a camera controller, an image processing IC, a microprocessor unit (MPU), a system on chip (SoC), an IC, or the like.

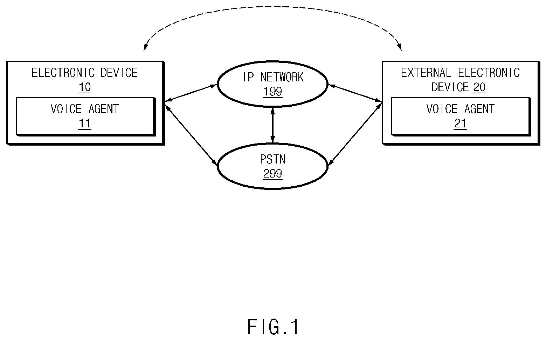

FIG. 1 is a diagram illustrating a system in which an electronic device communicates with an external electronic device, according to an embodiment of the disclosure.

Referring to FIG. 1, the system in which the electronic device communicates with the external electronic device according to an embodiment may include at least one of an electronic device 10, an external electronic device 20, voice agents 11 and 21, an internet protocol (IP) network 199, and a public switched telephone network (PSTN) 299. For example, the voice agent may include generative artificial intelligence (AI). The generative AI can generate new similar content using existing content such as text, audio, images, and so on.

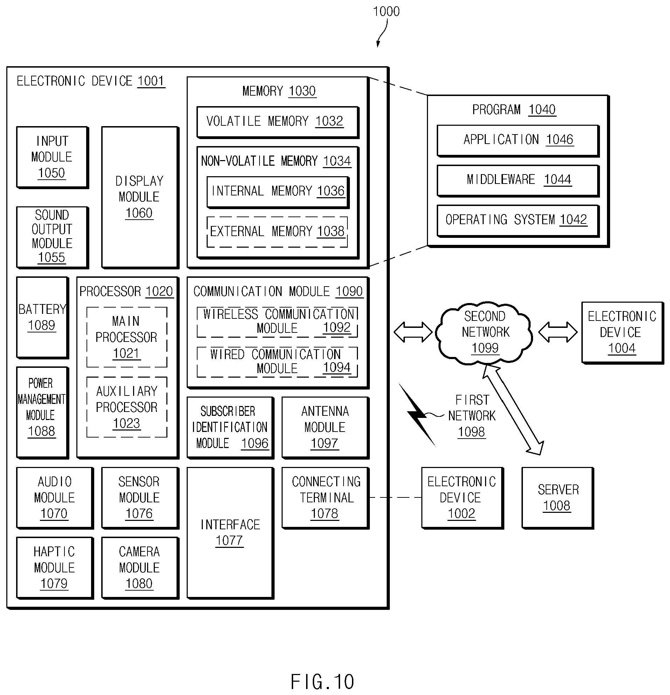

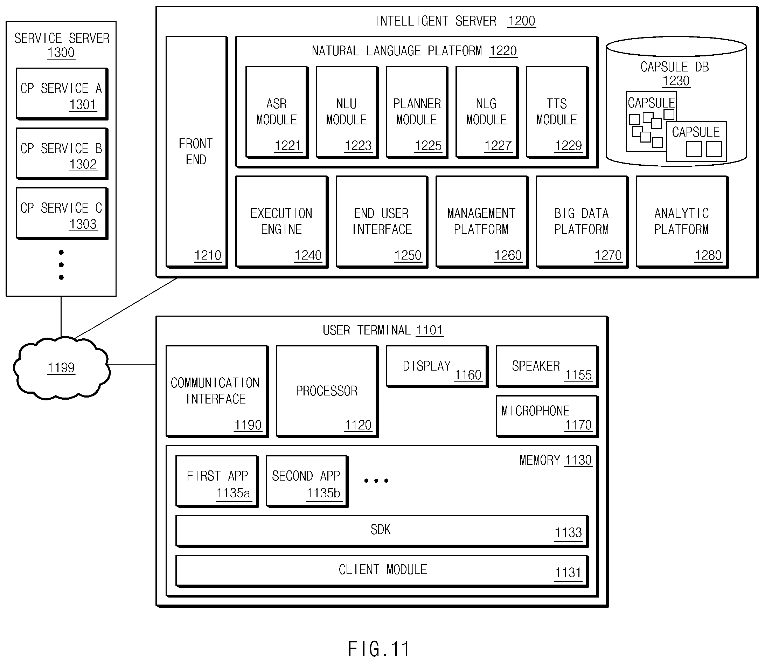

The electronic device (e.g., the electronic device 10 and external electronic device 20) may include any type of wireless communication device, such as, for example, a smartphone, a smart pad, a tablet PC, a wearable device, a connected car, and/or a portable terminal. The electronic devices may include, for example, a stationary terminal such as a desktop computer or a smart television (TV). The electronic device 10 may be referenced by an electronic device 1001 of FIG. 10 or a user terminal 1101 of FIG. 11. The external electronic device 20 may be referenced by an electronic device 1004 of FIG. 10.

In an embodiment, the electronic device 10 may communicate with the external electronic device 20. For example, the electronic device 10 may communicate with the external electronic device 20 through at least one of the IP network 199 or the PSTN 299. For example, the electronic device 10 may exchange information with the external electronic device 20 by performing voice communication or data communication therewith. The electronic device 10 may exchange information with the external electronic device 20 through short-range wireless communication. For example, the electronic device 10 may perform short-range wireless communication with the external electronic device 20 based on ultra-wide band (UWB), Bluetooth, or near field communication (NFC).

In an embodiment, the electronic device 10 may receive user input in the form of voice, text, and/or touch from a user. The electronic device 10 may perform a task corresponding to the user input through a voice agent. For example, performing the task may include executing at least one application. For example, at least one application may include an application associated with performing various types of tasks including (but not limited to) making a phone call, retrieving information, proceeding with remittance or payment, writing a short message service (SMS) message, writing an email, playing music, taking a photo, finding a user's location, mapping/navigation services, and so on.

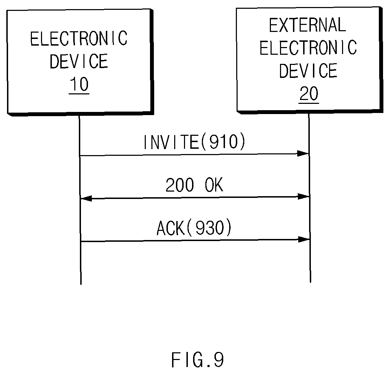

For example, the electronic device 10 may establish a dialogue session for voice communication with the external electronic device 20 through the IP network 199. For example, a procedure for establishing the dialogue session for voice communication may be referenced in FIG. 9. The voice agent 11 of the electronic device 10 may exchange voice and/or data information with the external electronic device 20 through an established dialogue session. The voice agent 11 of the electronic device 10 may provide the user input in real time to the external electronic device 20 through the dialogue session.

The electronic device 10 may provide an operation result performed by the voice agent 11 to the user. For example, the electronic device 10 may provide the operation result to the user through a visual interface and/or an auditory interface. For example, the electronic device 10 may provide a dialogue response as an operation result corresponding to the user input to the user in various forms, such as visual, auditory, and/or tactile forms (for example, they may include, but are not limited to, voice, sound, text, video, image, symbol, emoticon, hyperlink, animation, various notices, motion, haptic feedback, and so on), and so on.

The network (e.g., the IP network 199 and PSTN 299) may refer to a connection structure that allows information exchange between nodes such as a plurality of electronic devices (e.g., the electronic device 10 and external electronic device 20) and a server (e.g., a voice agent server). For example, the network includes a local area network (LAN), a wide area network (WAN), the Internet, a wired and wireless data communication network, a telephone network, and/or a wired and wireless television communication network, and so on. The wireless data communication network may include, but is not limited to, the cellular network, world interoperability for microwave access (WIMAX) network, Wi-Fi network, Internet, local area network (LAN), wireless local area network (WLAN), wide area network (WAN), personal area network (PAN), radio frequency (RF)-based network, Bluetooth network, near-field communication (NFC) network, satellite broadcasting network, analog broadcasting network, and/or digital multimedia broadcasting (DMB) network, and so on. For example, the network may be referenced by a second network 1099 of FIG. 10.

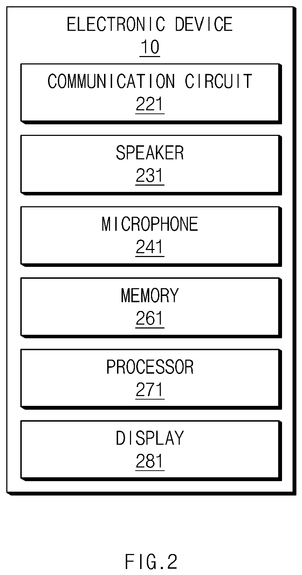

FIG. 2 is a block diagram illustrating a configuration of the electronic device, according to an embodiment of the disclosure.

Referring to FIG. 2, the electronic device 10 may include at least one of a communication circuit 221, a speaker 231, a microphone 241, memory 261, a processor 271, or a display 281.

In an embodiment, the communication circuit 221 may support communication between the electronic device 10 and at least one external device (e.g., the external electronic device 20, a broadcasting server, and/or a controller (remote control)). For example, the communication circuit 221 may transmit and receive signals or data to and from the at least one external electronic device by connecting to an external network (e.g., the IP network 199 and/or the PSTN 299). For example, the communication circuit 221 may transmit and receive, based on wired or wireless communication, signals or data to and from at least one external device by connecting to a network based on conforming to a prescribed protocol. The communication circuit 221 may be referenced by a communication module 1090 of FIG. 10.

The speaker 231 may output audio data as an audio signal. The speaker 231 may convert an electrical signal including audio data into an audio signal to output the audio signal. The speaker 231 may include at least one of a digital to analog convertor (DAC) that analogizes digitized electrical signals or an amplifier that amplifies the electrical signals analogized by the digital-to-analog converter. The speaker 231 may be referenced by a sound output module 1055, which will be described below with reference to FIG. 10.

The microphone 241 may receive a voice signal. In an embodiment, the microphone 241 may include at least one microphone device mounted in one area of the electronic device 10, and may be controlled to be activated by being triggered by the execution of a specific application (e.g., voice recognition application) or to be in a state of being activated at all times (e.g., always on microphone). The microphone 241 may include at least one microphone device mounted on a controller (e.g., remote control) that interacts with the electronic device 10. The at least one microphone device mounted on the controller may transmit the received voice input to the electronic device 10. At least a portion of the at least one microphone device mounted on the electronic device 10 or the controller may be exposed to the outside of the electronic device 10 or the controller in relation to a reception efficiency of the voice input. The microphone 241 may be referenced by an input module 1050, which will be described below with reference to FIG. 10.

The memory 261 may include internal memory or external memory. The internal memory may include at least one of, for example, the volatile memory (e.g., dynamic random access memory (DRAM), static random access memory (SRAM), or synchronous DRAM (SDRAM)), the non-volatile memory (e.g., programmable read-only memory (PROM), one time PROM (OTPROM), erasable PROM (EPROM), electrically erasable and PROM (EEPROM), mask ROM, flash ROM, flash memory), hard drive, or solid state drive (SSD). The external memory may include at least one of a flash drive (e.g., compact flash), secure digital (SD), micro-SD, mini-SD, extreme digital (xD), multi-media card (MMC), or memory stick. The memory 261 may be referenced by memory 1030, which will be described below with reference to FIG. 10.

The memory 261 may store instructions that can be executed by the processor 271. The memory 261 may store at least one data related to an operation of the electronic device 10 or commands related to a functional operation of the components of the electronic device 10. For example, the memory 261 may store the user input. For example, the user input may include at least one of voice input received through the microphone 241 or touch input through a display 281. The memory 261 may store at least one application that is loaded in a preloaded form when manufacturing the electronic device 10 or is downloaded in the form of a third party from an online market (e.g., app store). For example, the at least one application may include a voice recognition application that supports the operation of a voice recognition service.

The display 281 may output various screens. For example, the processor 271 may output various screens (e.g., a main interface screen, a home screen, a system settings screen, or an application execution screen) using the display 281. For example, the display 281 may provide a response received from the external electronic device 20. For example, if a responder of the external electronic device 20 is the voice agent 21, the display 281 may provide the user with information that the responder is the voice agent 21 through a user interface (UI). For example, the voice agent may include the generative artificial intelligence (AI). The generative AI can generate new similar content using existing content such as text, audio, images, and so on.

The display 281 may be implemented as a touch screen display including a display panel, cover glass, and a touch panel (or touch sensor). The display panel may receive a driving signal corresponding to image information at a designated frame rate and output a screen corresponding to the image information based on the driving signal. The cover glass may transmit light according to screen output of the display panel by being disposed on top of the display panel. The display 281 may be referenced by a display module 1060, which will be described below with reference to FIG. 10.

The processor 271 may be connected to the communication circuit 221, the speaker 231, the microphone 241, the memory 261, and the display 281. For example, the processor 271 may be electrically connected to components of the electronic device 10. For example, the processor 271 may be connected to the components of the electronic device 10 in a wired manner or wirelessly. The processor 271 may be configured with a single chip or a plurality of chips. The processor 271 may include at least one processing circuitry. The processor 271 may perform operations in computing required for the operation of the electronic device 10. The processor 271 may control the components of the electronic device 10. The processor 271 may be referenced by a processor 1020, which will be described below with reference to FIG. 10.

In this disclosure, the operation of the electronic device 10 may be referred to as being performed by the processor 271. The processor 271 may include at least one electrical circuit that executes a command of software, and may perform various data processing and computations, which will be described below, using the at least one electric circuit.

In an example, the processor 271 may transmit voice data according to the user voice input, which is received through the microphone 241, to an external server. The processor 271 may receive and process a signal, data, or command according to voice data analysis from the external server. The processor 271 may identify a task corresponding to the user input through the external server. For example, processor 271 may determine the intent of the user associated with the user input from the external server. The processor 271 may identify a task to be performed based on the intent of the user.

In an example, the processor 271 may include an auxiliary processor (e.g., a neural processing unit (NPU) or a graphics processing unit (GPU)). The processor 271 may perform the task based on the user input using the auxiliary processor. For example, the processor 271 may grasp the intent of the user by recognizing and analyzing the user input (e.g., voice input or touch input) acquired from the user. The processor 271 may identify the task corresponding to the user input by determining the intent of the user. The processor 271 may perform the identified task based on the user input. For example, the task may include the execution of a specific application.

In an embodiment, the processor 271 may preprocess voice data received through the microphone 241 for voice recognition. For example, the processor 271 may perform preprocessing for at least one of adaptive echo canceller, which removes an echo included in voice data, noise suppression, which suppress background noise by filtering voice data, automatic gain control, which changes the volume or frequency characteristics by applying a gain value to voice data, or end-point detection, which determines a section of voice data by detecting an end point of voice input of the user.

The processor 271 may acquire the user input from the user. For example, the user input may include at least one of voice input or touch input. The processor 271 may acquire the voice input from the user through the microphone 241. The processor 271 may acquire the touch input from the user through the display 281.

The processor 271 may call the voice agent 11 based on the user input. For example, the user input may include a designated command (e.g., wake-up word) for calling the voice agent 11. For example, the processor 271 may call the voice agent 11 through an intelligent app (or voice recognition app) built in the electronic device 10. For example, the voice agent 11 may include the generative artificial intelligence (AI). The generative AI can generate new similar content using existing content such as text, audio, image, and so on.

The voice agent 11 may receive the user input (e.g., voice input or touch input) from the user. The voice agent 11 may identify the task based on the user input. The voice agent 11 may perform the identified task. For example, at least some of the operations of the processor 271, which will be described below, may be referred to as being performed by the voice agent 11.

The processor 271 may identify the task based on the user input by using the voice agent 11. The processor 271 may determine the intent of the user associated with the user input, either alone or through an external server, based on the user input. The processor 271 may identify the task corresponding to the user input through the determined intent of the user. The processor 271 may identify at least one parameter (e.g., application, entity, or slot) associated with the task based on the user input and/or context information of the user. For example, the task may include the execution of a specific application.

For example, if the user input is related to a meal reservation at a specific restaurant, the processor 271 may determine the user intent of 'restaurant reservation'. In this case, processor 271 may identify the task related to calling the specific restaurant and transmitting information required for the meal reservation. For example, information required for the meal reservation may include at least one of a reservation time, number of people, or meal menu.

For example, if the user input is for 'Please print out and prepare the photo taken at a photo studio (e.g., photo stored in the gallery of the electronic device 10) by a certain time', the processor 271 may make a call to the photo studio (e.g., the external electronic device 20) and transmit image information for the photo stored in the gallery and text information including reservation information to the photo studio.

In an example, if the user input includes unclear information in relation to the restaurant reservation, the processor 271 may determine the intent of the user using data information (e.g., characteristic information personalized to the user) associated with the user. For example, personalized characteristic information of the user may include personal information, search record, or viewing record of the user stored in an arbitrary application.

For example, if at least one of a restaurant name, meal menu, number of people reserved, or reservation time is omitted in relation to the restaurant reservation in the user input, such as "Please make a reservation for dinner at a Chinese restaurant I often go to," the processor 271 may specify omitted information using the personalized characteristic information of the user. As another example, if at least one of the restaurant name, meal menu, number of people reserved, or reservation time is omitted in relation to the restaurant reservation, such as "Please make a reservation for a meal at a good Chinese restaurant," the processor 271 may identify a popular Chinese restaurant around the user using an information search application and/or a map app. In addition, in consideration of the current time, the processor 271 may distinguish whether the time the user intends to make a reservation is lunch time (e.g., 12 p.m.) or dinner time (e.g., 6 p.m.).

In an example, if the user input includes unclear information in relation to the restaurant reservation, the processor 271 may acquire additional user input from the user. For example, if user input contains unclear information in relation to a restaurant reservation, the processor 271 may request the user to provide the unclear information by using the voice agent 11. For example, the voice agent 11 may request provision of the unclear information audibly through the speaker 231. For example, the voice agent 11 may request provision of the unclear information visually through the display 281.

The processor 271 may perform the identified task using the voice agent 11. For example, the processor 271 may transmit voice information associated with the identified task to an external electronic device (e.g., the external electronic device 20). While performing the identified task, the processor 271 may request provision of information indicating whether a responder of the external electronic device 20 is the voice agent (e.g., the voice agent 21). For example, the processor 271 may request the provision of the information indicating whether the responder is the voice agent along with the transmission of voice information associated with the task.

For example, the processor 271 may perform a task by establishing a connection for voice and/or data communication to the external electronic device (e.g., the external electronic device 20). In an example, a response of the external electronic device 20 may be performed by the voice agent 21 of the external electronic device 20. That is, the voice agent 11 of the electronic device 10 may perform the task through voice and/or data communication with the voice agent 21 of the external electronic device 20.

In an example, the processor 271 may transmit a request for setup of a first session to the external electronic device (e.g., the external electronic device 20) in order to perform the task. For example, the first session may be for voice call communication. For example, the processor 271 may transmit a request for voice call communication to the external electronic device 20 through the communication circuit 221 using the voice agent 11. For example, the request for voice call communication may be described below with reference to FIG. 9. For example, if the task identified based on the user input is related to 'restaurant reservation,' the voice agent may call the restaurant for which a reservation is to be made through a call application. In an embodiment, the voice agent 11 may identify a phone number of the restaurant for which a reservation is to be made in the memory 261. Alternatively, the voice agent 11 may search for the phone number of the restaurant for which a reservation is to be made through an external server. For example, the external server may be referenced by a service server 1300 of FIG. 11.

The processor 271 may receive a response from the external electronic device 20 using the voice agent 11. In an example, the processor 271 may receive a first session initiation response, which is a response to a 'request for voice call communication', from the external electronic device 20. If the processor 271 receives the first session initiation response, the processor 271 may exchange information with the external electronic device 20. The first session initiation response (e.g., an SIP 200 OK message of FIG. 9) may be described below with reference to FIG. 9.

In an example, the processor 271 may receive a response to 'voice information associated with the task transmitted to the external electronic device 20'. If the processor 271 receives the response to voice information associated with the task transmitted to the external electronic device 20, the processor 271 may provide the received response to the user. For example, if the task is related to 'restaurant reservation,' the processor 271 may transmit information required for the reservation as voice information by calling the restaurant for which a reservation is to be made (e.g., the external electronic device 20).

In an example, the processor 271 may acquire a response from the voice agent 21 of the external electronic device 20 during voice communication with the user of the external electronic device 20. For example, if the user of the external electronic device 20 switches the responder to the voice agent 21 during a phone call, the processor 271 may acquire a response including information indicating that the responder is a voice agent from the voice agent 21. For example, the information indicating that the responder is a voice agent may include pattern information based on dual tone multiple frequency (DTMF).

In an example, the processor 271 may receive the response from the external electronic device 20 through a separate channel. For example, the separate channel may be referenced by a communication channel based on short-range wireless communication described above with reference to FIG. 1. For example, the processor 271 may exchange information with the external electronic device 20 through the separate channel.

The processor 271 may determine whether the responder is the voice agent 21 based on machine learning using the voice agent 11, based on the response received from the external electronic device 20. For example, if the response replied from the external electronic device 20 includes information indicating that the responder is the voice agent 21, the processor 271 may determine that the responder of the response is the voice agent 21.

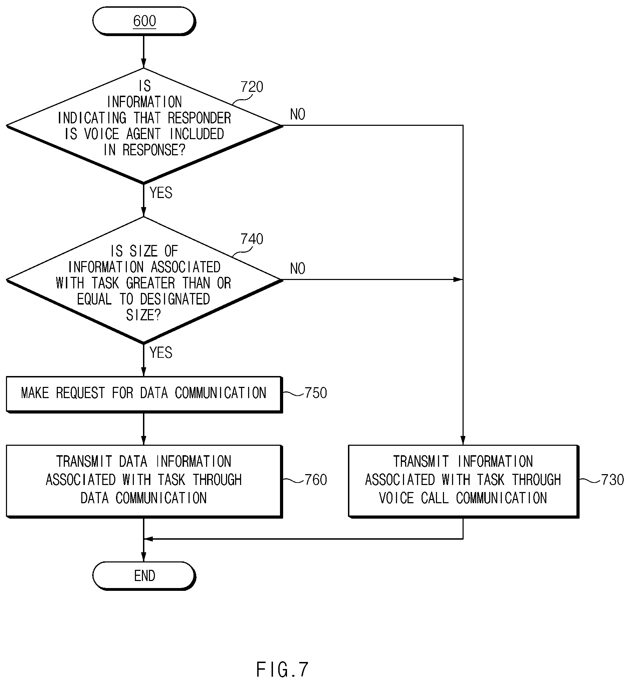

For example, the information indicating that the responder is the voice agent 21 may include at least one of identification information or pattern information. For example, the identification information may be included in a session description protocol (SDP) packet. For example, the pattern information may include frequency pattern information based on dual tone multiple frequency (DTMF). The information (e.g., identification information, pattern information) indicating that the responder is the voice agent 21 may be described below with reference to FIG. 7.

The voice agent 11 may identify that the responder of the external electronic device 20 is the voice agent 21 through short-distance wireless communication with the external electronic device 20. A method of identifying that the responder of the external electronic device 20 is the voice agent 21 through short-distance wireless communication may be described below with reference to FIG. 7.

If the processor 271 determines that the responder of the response received from the external electronic device 20 is the voice agent 21, the processor 271 may transmit data information including information associated with the task to the external electronic device 20. For example, if the processor 271 receives the response from the restaurant (e.g., external electronic devices 20) including the "information indicating that the responder is a voice agent", the processor 271 may transmit the information required for reservation to the external electronic device 20 as data information. For example, the data information may include at least one of image information, text information, audio information, or video information.

The processor 271 may transmit a request for setup of a second session to the external electronic device 20 using the voice agent 11. For example, the second session may be for data communication. For example, in order to transmit the data information, the processor 271 may use a protocol (e.g., transmission control protocol (TCP)) different from a protocol (e.g., real-time transport protocol (RTP)) used during voice call communication. In this case, the processor 271 may transmit a request for data communication (e.g., arbitrary data communication through an IP network) to the external electronic device 20 through the communication circuit 221. For example, the request for data communication may correspond to a connection request according to a connection procedure of the transmission control protocol (TCP), Internet protocol (IP), or user datagram protocol (UDP). The processor 271 may exchange data information associated with the task by performing data communication with the voice agent 21 of the external electronic device 20.

In an embodiment, the processor 271 may make a request for setup of the second session for data communication based on a size of the data information intended to be transmitted to the external electronic device 20. For example, if the size of the data information intended to be transmitted to the external electronic device 20 is greater than or equal to a designated size, the processor 271 may transmit a request to set up the second session. For example, if the size of the data information associated with the task is greater than or equal to the designated size, the processor 271 may transmit the data information through for setup of the second session rather than the first session.

For example, if the size of the data information intended to be transmitted to the external electronic device 20 is less than the designated size, the processor 271 may transmit the data information through the first session for voice call communication. For example, if the size of the data information (e.g., text information) intended to be transmitted to the external electronic device 20 is small and thus the data information can be transmitted through the first session for voice call communication, the Processor 271 may transmit the data information through the first session.

If the processor 271 determines that the responder of the response received from the external electronic device 20 is the voice agent 21, the processor 271 may provide a notification indicating that the responder is the voice agent 21 to the user using the voice agent 11. For example, the processor 271 may provide the notification indicating that the responder is the voice agent 21 to the user, by displaying a user interface (UI) on the display. For example, the processor 271 may provide the notification as audio through the speaker 231.

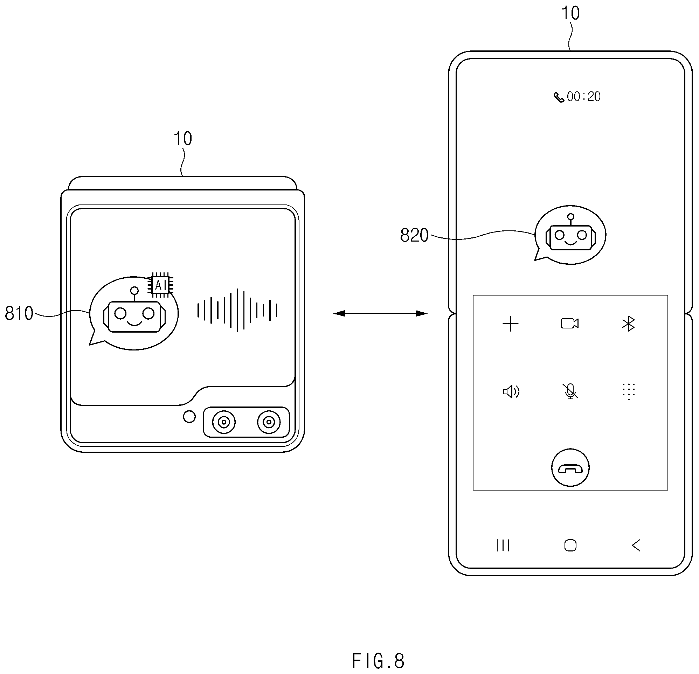

The processor 271 may include information indicating that a requester and/or communicator is the voice agent 11 in the request to set up the first session, by using the voice agent 11. For example, if a person performing voice call communication with the external electronic device 20 is the voice agent 21, the processor 271 may include the information indicating that the requestor and/or communicator is the voice agent 11 in the request to set up the first session for voice call communication. The information indicating that the requestor and/or communicator is the voice agent 11 may be described below with reference to FIGS. 7 and/or 8.

Each of the components of the electronic device 10 described above may include a single or plurality of entities, and some of the plurality of entities may be separately arranged in other components. In an embodiment, one or more of the corresponding components or operations described above may be omitted, or one or more other components or operations may be added.

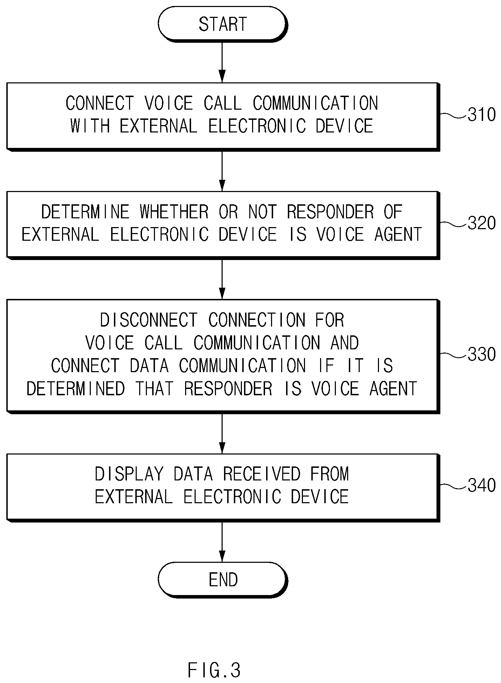

FIG. 3 is a flowchart of a method in which an electronic device communicates with an external electronic device, according to an embodiment of the disclosure.

Referring to FIGS. 2 and 3, in operation 310, the electronic device 10 may establish a connection of the first session for voice call communication with the external electronic device (e.g., the external electronics 20). In an embodiment, the electronic device 10 may receive user input from the user. The electronic device 10 may request the external electronic device 20 to set up the first session for voice call communication in order to perform a task corresponding to the user input. For example, if the task corresponding to the user input is related to 'restaurant reservation', in order to make a reservation, the electronic device 10 may make a call to a restaurant (e.g., external electronic device 20) to make a request for setup of the first session for voice call communication. If the electronic device 10 receives the first session initiation response to voice call communication from the external electronic device 20, the electronic device 10 may exchange voice information with the external electronic device 20. For example, the electronic device 10 may transmit information required for restaurant reservation as voice information and receive the result thereof.

In operation 320, the electronic device 10 may determine whether or not the responder is the voice agent 21 based on the response received from the external electronic device 20. In an embodiment, the electronic device 10 may identify whether information indicating that the responder is the voice agent 21 is included in the response received from the external electronic device 20. If the information indicating that the responder is the voice agent 21 is included in the response, the electronic device 10 may determine that the responder of the response is the voice agent 21. The information indicating that the responder is the voice agent 21 may be described below with reference to FIG. 7.

In operation 330, if the electronic device 10 determines that the responder of the response received from the external electronic device 20 is the voice agent (e.g., voice agent 21), the electronic device 10 may terminate the first session and establish a connection of the second session for data communication. For example, an establishment procedure of a data communication connection may correspond to a connection procedure of TCP. In an example, the electronic device 10 may disconnect the connection of the first session for voice call communication if the responder of the external electronic device 20 is the voice agent 21. In this case, the electronic device 10 may perform data communication by making a request to set up the second session for separate data communication, instead of voice communication for exchanging voice information. For example, if the user intends to make a restaurant reservation using the voice agent 11, the electronic device 10 may terminate the first session for voice call communication and perform the task associated with the restaurant reservation through the second session for data communication, based on the determination that the responder of the external electronic device 20 is the voice agent 21.

Although operation 330 of FIG. 3 is illustrated as terminating the first session for voice call communication and establishing the connection of the second session for separate data communication, the operation may not be limited thereto. For example, if the electronic device 10 determines that the responder of the response received from the external electronic device 20 is the voice agent 21, the electronic device 10 may establish the connection of the second session for separate data communication while maintaining the first session for voice call communication. For example, if the user of the electronic device 10 intends to transmit additional voice information in the process of data communication between the voice agent 11 of the electronic device 10 and the voice agent 21 of the external electronic device 20, the electronic device 10 may transmit voice information of the user through voice call communication. For example, if the user intends to make a restaurant reservation and then cancels the reservation, the electronic device 10 may transmit voice information corresponding to the reservation cancellation of the user through voice call communication.

In operation 340, the electronic device 10 may receive data information from the external electronic device 20 and display the received data information. In an embodiment, the electronic device 10 may exchange data information with the external electronic device 20 through data communication. For example, the data communication may be performed through the first session and/or the second session. The electronic device 10 may provide the received data information to the user. For example, the electronic device 10 may provide the received data information to the user using the display 281 or the speaker 231.

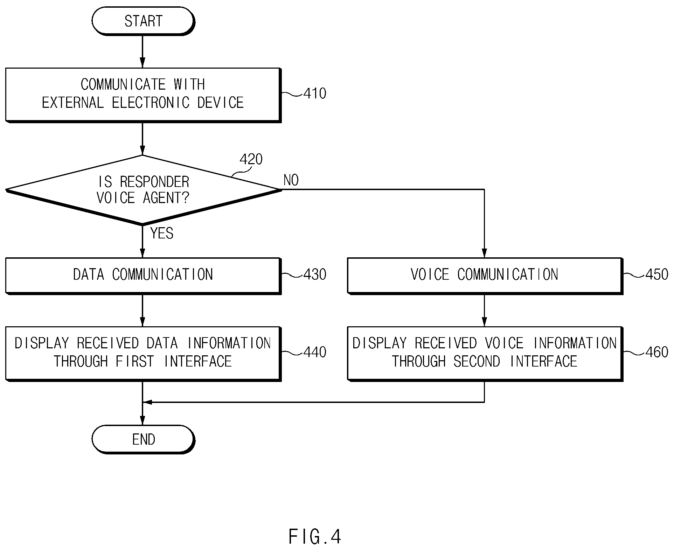

FIG. 4 is a flowchart of a method in which an electronic device communicates with an external electronic device, according to an embodiment of the disclosure.

Referring to FIGS. 2 to 4, in operation 410, the electronic device 10 may communicate with the external electronic device (e.g., the external electronic device 20). For example, the electronic device 10 may perform voice call communication with the external electronic device 20. Operation 410 may be referenced by operation 310.

In operation 420, the electronic device 20 may determine whether or not the responder of the response received from the external electronic device 20 is the voice agent (e.g., the voice agent 21). For example, the response received from the external electronic device 20 may include at least one of a response to 'a request to establish a first session for voice call communication', a response to 'voice information associated with the task transmitted by the electronic device 10', or a response acquired through a separate channel. The electronic device 10 may identify whether information indicating that the responder is the voice agent 21 is included in the received response. If the information indicating that the responder is the voice agent 21 is included in the received response, the electronic device 10 may determine that the responder of the response is the voice agent 21. The information indicating that the responder is the voice agent 21 may be described below with reference to FIG. 7.

If the electronic device 10 determines that the responder of the external electronic device 20 is the voice agent (e.g., voice agent 21) (e.g., Yes in operation 420), the electronic device 10 may perform data communication with the external electronic device 20 in operation 430. In an embodiment, if the responder of the external electronic device 20 is the voice agent 21, the electronic device 10 may exchange information by performing data communication rather than voice communication. For example, the voice communication may include the exchange of voice information between the electronic device 10 and the external electronic device 20. For example, the data communication may include the exchange of data information between the electronic device 10 and the external electronic device 20.

If a connection of voice call communication is established between the electronic device 10 and the external electronic device 20, the electronic device 10 may newly establish a separate data communication connection with the external electronic device 20 while disconnecting or maintaining the connection of voice call communication. The electronic device 10 may change the communication protocol thereof to an efficient communication protocol in order to perform data communication with the voice agent 21. For example, the electronic device 10 may use real-time transport protocol (RTP) when performing voice call communication, while may use transmission control protocol (TCP) when performing data communication.

In addition, if the size of the data information intended to be transmitted to the external electronic device 20 is smaller than the designated size, the electronic device 10 may also perform data communication using RTP. That is, if the size of the data information intended to be transmitted to the external electronic device 20 is smaller than the designated size, the electronic device 10 may exchange data information by performing data communication with the external electronic device 10 using either RTP or TCP.

The electronic device 10 may perform data communicate with the voice agent 21 using TCP. For example, in order to perform the task corresponding to the user input, the electronic device 10 may transmit data information associated with the task through data communication. For example, when performing a task related to 'restaurant reservation', the electronic device 10 may transmit data information including information required for reservation to a restaurant (e.g., the external electronic device 20) through data communication. In response to this, the electronic device 10 may receive a response (e.g., whether or not the reservation has been completed) from the restaurant through data communication.

In operation 440, the electronic device 10 may display data information received from the external electronic device 20 through a first interface. In an embodiment, the electronic device 10 may exchange data information with the external electronic device 20. If the electronic device 10 receives the data information from the external electronic device 20, the electronic device 10 may provide the data information to the user by displaying the data information through the first interface. For example, if the electronic device 10 transmits the data information in order to perform the task related to 'restaurant reservation' described above, the electronic device 10 may receive data information about the response (e.g., whether or not the reservation has been completed) from the restaurant (e.g., the external electronic device 20). In this case, the electronic device 10 may provide the received data information to the user through a user interface (UI) on the display 281. Alternatively, the electronic device 10 may provide the received data information to the user through the speaker 231 by converting the received data information into audio information.

If the responder of the external electronic device 20 determines that the responder is not the voice agent 21 (e.g., No in operation 420), the electronic device 10 may perform voice communication with the external electronic device 20 in operation 450. In an embodiment, the electronic device 10 may exchange information by performing voice communication if the responder of the external electronic device 20 is not the voice agent 21. In this case, the electronic device 10 may perform voice communication with the external electronic device 20 using RTP. For example, in order to perform the task corresponding to the user input, the electronic device 10 may transmit data information associated with the task through voice communication. For example, when performing the task related to 'restaurant reservation', the electronic device 10 may transmit voice information including information required for reservation to the restaurant (e.g., the external electronic device 20) through voice communication. In response to this, the electronic device 10 may receive a response (e.g., response including information indicating whether or not the reservation has been completed) from the restaurant through voice communication.

In operation 460, the electronic device 10 may display voice information received from the external electronic device 20 through a second interface. In an embodiment, the electronic device 10 may exchange voice information with the user of the external electronic device 20. IF the electronic device 10 receives voice information from the external electronic device 20, the electronic device 10 may provide the voice information to the user by displaying the voice information through the second interface. For example, if the voice information is transmitted in order to perform the task related to 'restaurant reservation' in operation 450 described above, the electronic device 10 may receive voice information about the response (e.g., whether or not the reservation has been completed) from the restaurant (e.g., the external electronic device 20). In this case, the electronic device 10 may provide the received voice information to the user through the user interface (UI) on the display 281 by converting the received voice information into data information. Alternatively, the electronic device 10 may provide the received voice information to the user through the speaker 231.

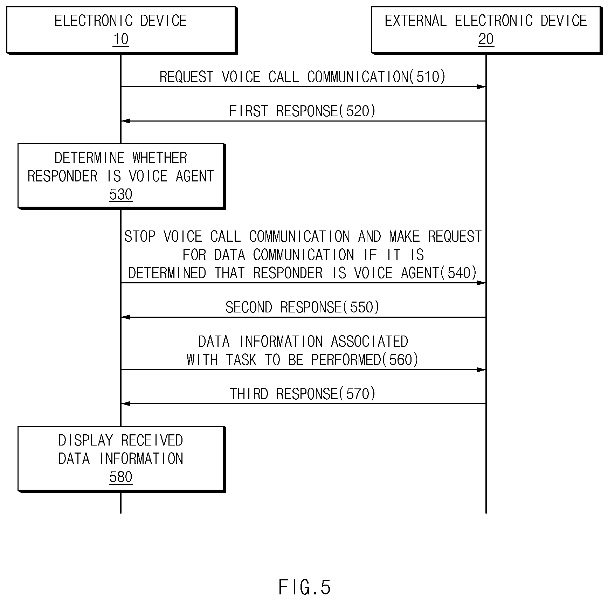

FIG. 5 is a signal flow diagram illustrating a method for communicating between an electronic device and an external electronic device, according to an embodiment of the disclosure.

Referring to FIGS. 2 to 5, in operation 510, the electronic device 10 may transmit a signal requesting for setup of the first session for voice call communication to the external electronic device 20. In an embodiment, the electronic device 10 may acquire the user input (e.g., touch input, voice input) from the user. The electronic device 10 may transmit the signal requesting for setup of the first session for voice call communication to the external electronic device 10 in order to perform a task corresponding to the user input. For example, if the task corresponding to the user input is related to 'restaurant reservation', the electronic device 10 may make a call by transmitting the signal requesting for setup of the first session for voice call communication to the restaurant (e.g., external electronic device 20) in order to make a reservation.

In operation 520, the external electronic device 20 may transmit a first response to the electronic device 10. For example, the first response may include at least one of a response to 'request for setup of the first session', a response to 'voice information associated with the task transmitted by the electronic device 10', or a response acquired through a separate channel.

In an embodiment, the external electronic device 20 may transmit the first session initiation response, which is a response to the request for setup of the first session, to the electronic device 10. For example, the external electronic device 20 may exchange information with the electronic device 10 if the electronic device 10 receives the first session initiation response. The first session initiation response (e.g., the SIP 200 OK message in FIG. 9) may be described below with reference to FIG. 9.

In addition, the external electronic device 20 may transmit 10 a response to voice information, which is associated with the task transmitted by the electronic device 10, to the electronic device. For example, if the voice information associated with the task transmitted by the electronic device 10 is information required when making a reservation in relation to 'restaurant reservation', the external electronic device 20 may provide a result regarding whether or not the reservation has been completed.

In addition, the external electronic device 20 may transmit a response notifying that the responder is the voice agent to the electronic device 10 through a separate channel. For example, the separate channel may be referenced by a communication channel based on short-range wireless communication described above with reference to FIG. 1. For example, the external electronic device 20 may exchange information with the electronic device 10 through the separate channel.

In operation 530, the electronic device 10 may determine whether or not the responder is the voice agent (e.g., voice agent 21) based on the response received from the external electronic device 20. In an embodiment, the electronic device 10 may identify whether information indicating that the responder of the response is the voice agent 21 is included in the response received from the external electronic device 20. If the information indicating that the responder is the voice agent 21 is included in the response, the electronic device 10 may determine that the responder of the response is the voice agent 21. The information indicating that the responder is the voice agent 21 may be described below with reference to FIG. 7.

In operation 540, if the electronic device 10 determines that the responder of the response received from the external electronic device 20 is the voice agent 21, the electronic device 10 may stop voice call communication and transmit a signal requesting for setup of the second session for data communication. In an embodiment, the electronic device 10 may stop voice call communication if the responder of the external electronic device 20 is the voice agent 21. In this case, the electronic device 10 may transmit the signal requesting for setup of the second session for separate data communication. The electronic device 10 may exchange data information with the voice agent 21, which is the responder of the external electronic device 20, through data communication. The data communication may be performed through the first session and/or the second session.

In operation 550, the external electronic device 20 may transmit a second response. In an embodiment, the external electronic device 20 may transmit a second session initiation response, which is the second response to a request to set up the second session. For example, the voice agent 21 of the external electronic device 20 may transmit the second session initiation response in order to exchange data information with the electronic device 10.

In operation 560, the electronic device 10 may transmit data information associated with the task to be performed to the external electronic device 20. For example, the data information may include data information. In an embodiment, the electronic device 10 may transmit data information including information associated with the task to the external electronic device 20. For example, if the user input by the user is 'restaurant reservation,' the electronic device 10 may perform a task for restaurant reservation. In this case, the electronic device 10 may transmit data information including information required for the restaurant reservation to the restaurant (e.g., external electronic device 20).

In operation 570, the external electronic device 20 may transmit a third response. In an embodiment, the external electronic device 20 may transmit the third response based on data information transmitted by the electronic device 10 in operation 560. For example, the external electronic device 20 may transmit data information to the electronic device 10 through data communication. In this case, the data information may include data information. For example, if the electronic device 10 transmits data information containing information required for the restaurant reservation described above, the external electronic device 20 may transmit data information including whether or not the reservation has been completed to the electronic device 10.

In operation 580, the electronic device 10 may receive data information from the external electronic device 20 and display the received data information. In an embodiment, the electronic device 10 may exchange data information with the external electronic device 20 through data communication. The electronic device 10 may provide the received data information to the user. For example, the electronic device 10 may provide the received data information to the user using the display 281 or the speaker 231. For example, if the electronic device 10 transmits data information in order to perform the task related to 'restaurant reservation' described above, the electronic device 10 may receive data information about the response (e.g., whether or not the reservation has been completed) from the restaurant (e.g., the external electronic device 20). In this case, the electronic device 10 may provide the received data information to the user through a user interface (UI) on the display 281. Alternatively, the electronic device 10 may provide the received data information to the user through the speaker 231 by converting the received data information into audio information.

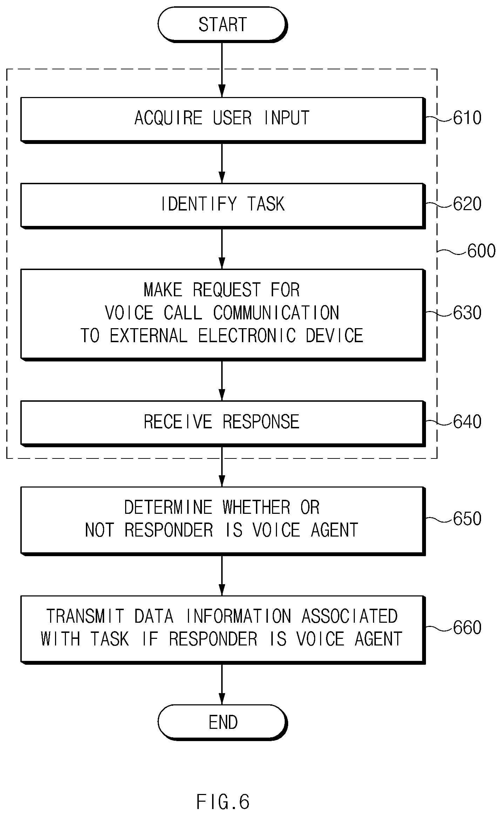

FIG. 6 is a flowchart of a method in which the electronic device communicates with the voice agent of the external electronic device, according to an embodiment of the disclosure.

Referring to FIGS. 2 and 6, in operation 610, the electronic device 10 may acquire user input from the user. For example, the user input may include at least one of voice input or touch input. In an embodiment, the electronic device 10 may acquire the voice input from the user through the microphone 241. The electronic device 10 may acquire the touch input from the user through the display 281.

In operation 620, the electronic device 10 may identify a task based on the user input. In an embodiment, if the electronic device 10 acquires the voice input from the user, the electronic device 10 may convert voice data of the voice input into text data using an automatic speech recognition (ASR) module. For example, the automatic voice recognition module may convert received voice input into text data by recognizing the received voice input. The automatic voice recognition module may convert voice input into text data using an acoustic model including at least one piece of information related to utterance or vocalization, or a language model including at least one piece of unit phoneme information and combination information of pieces of unit phoneme information. The automatic voice recognition module may deliver converted text data to a natural language understanding module. The voice input of the user converted into text data by the automatic voice recognition module may be processed in the electronic device 10 or processed by being transmitted to an external server. The automatic voice recognition module may be referenced by the automatic voice recognition module 1221, which will be described below with reference to FIG. 11.

In an embodiment, the electronic device 10 may derive the intent of the user related to the voice input based on the text data received from the automatic voice recognition module. Alternatively, the electronic device 10 may derive the intent of the user related to the touch input based on the user's touch. The natural language understanding module may divide the text data into grammatical units (e.g., words, phrases, or morphemes). The natural language understanding module may derive the intent of the user by analyzing text data divided into grammatical units into grammatical elements or linguistic features for each unit thereof. The natural language understanding module may generate signals, data, or command information related to the derived intent of the user. The natural language understanding module may map text data received from the automatic speech recognition module or text data based on touch input and the derived intent of the user to be stored in indexes or a database. If arbitrary text data is received from the automatic voice recognition module or if text data is acquired from the touch input, the natural language understanding module may identify text data of the same or similar aspect as the arbitrary text data in the indexes or the database. The natural language understanding module may acquire the intent of the user mapped to the identified text data. The natural language understanding module may be referenced by a natural language understanding module 1223, which will be described below with reference to FIG. 11.

The electronic device 10 may identify the task corresponding to the user input by derive the intent of the user. For example, if the user input is related to a 'meal reservation' at a specific restaurant, the processor 271 may identify a task related to 'restaurant reservation'. For example, the task related to 'restaurant reservations' may involve transmitting information required for the meal reservation by calling the specific restaurant. For example, information required for the meal reservation may include at least one of the reservation time, number of people, or meal menu.

In operation 630, the electronic device 10 may make a request for setup of the first session to the external electronic device (e.g., external electronic device 20) in order to perform the task. For example, the first session may be for voice call communication. For example, the electronic device 10 may transmit the request to set up the first session for voice call communication to the external electronic device 20 through the communication circuit 221 using the voice agent 11. For example, the connection procedure of the first session for voice call communication may be described below with reference to FIG. 9. For example, if the task identified based on the user input is related to 'restaurant reservation,' the voice agent 11 may call the restaurant for which a reservation is to be made through a call application.

In an example, the voice agent 11 may identify the phone number of the restaurant for which a reservation is to be made in the memory 261. Alternatively, the voice agent 11 may search for the phone number of the restaurant for which a reservation is to be made through an external server. For example, the external server may be referenced by the service server 1300 of FIG. 11.

In operation 640, the electronic device 10 may receive a response from the external electronic device 20. In an embodiment, the electronic device 10 may receive the first session initiation response that is a response to the 'request to set up the first session for voice call communication' from the external electronic device 20. If the electronic device 10 receives the first session initiation response, the electronic device 10 may exchange information with the external electronic device 20. The first session initiation response (e.g., the SIP 200 OK message in FIG. 9) may be described below with reference to FIG. 9.

In an example, the electronic device 10 may receive a response to 'voice information associated with the task transmitted by the electronic device 10.' For example, if the task identified in operation 620 is related to 'restaurant reservation', the electronic device 10 may transmit information required for reservation as voice information by making a call to the restaurant for which a reservation is to be made (e.g., the external electronic device 20). In this case, the electronic device 10 may receive a response from the restaurant regarding whether or not the reservation has been completed.

In an example, the electronic device 10 may receive the response from the external electronic device 20 through a separate channel. For example, the separate channel may be referenced by a communication channel based on short-range wireless communication described above with reference to FIG. 1. For example, the electronic device 10 may exchange information with the external electronic device 20 through the separate channel.

In operation 650, the electronic device 10 may determine, based on the response received from the external electronic device 20, whether or not the responder is the voice agent 21 based on machine learning. For example, if information indicating that the responder is the voice agent 21 is included in the response replied from the external electronic device 20, the electronic device 10 may determine that the responder of the response is the voice agent 21. For example, the information indicating that the responder is the voice agent 21 may include at least one of identification information or pattern information. The information indicating that the responder is the voice agent 21 (e.g., identification information, pattern information) may be described below with reference to FIG. 7.

In operation 660, if the electronic device 10 determines that the responder of the response received from the external electronic device 20 is the voice agent 21, the electronic device 10 may transmit data information including information associated with a task to the external electronic device 20. For example, if the task based on user input is related to 'restaurant reservation', the electronic device 10 may request that the restaurant for which a reservation is to be made (e.g., external electronic device 20) establishes voice communication and transmits information required for reservation as voice information in order to perform the task, by using the voice agent 11. In this case, if the electronic device 10 receives a response including 'information indicating that the responder is a voice agent' from the restaurant, the electronic device 10 may transmit the information required for reservation to the voice agent 21 as data information.

FIG. 7 is a flowchart of a detailed method in which the electronic device communicates with the voice agent of the external electronic device, according to an embodiment of the disclosure.

Referring to FIGS. 2, 6, and 7, the electronic device 10 may perform operation 600. For example, the electronic device 10 may acquire user input from the user. In addition, the electronic device 10 may identify a task based on the user input. In addition, the electronic device 10 may make a request for setup of the first session to the external electronic device (e.g., the external electronic device 20) in order to perform the identified task. In addition, the electronic device 10 may receive a response from the external electronic device 20.

In operation 720, the electronic device 10 may identify whether information indicating that the responder is the voice agent 21 is included in the response received from the external electronic device 20. If the electronic device 10 identifies that the information indicating that the responder is the voice agent 21 is included in the response received from the external electronic device 20, the electronic device 10 may determine that the responder of the response is the voice agent 21.

In an embodiment, when receiving a first session initiation response, the electronic device 10 may identify whether the information indicating that the responder is the voice agent 21 is included in the first session initiation response. For example, when the electronic device 10 and the external electronic device 20 initiate voice communication, they may use the session initiation protocol (SIP) and the session description protocol (SDP). In this case, the external electronic device 20 may transmit the SIP 200 OK message, which is a communication initiation response to be described below with reference to FIG. 9, by including identification information indicating that the responder is the voice agent 21 in the SIP 200 OK message. If the identification information indicating that the responder is the voice agent 21 is included in in the SIP 200 OK message, the electronic device 10 may determine that the responder is the voice agent 21. For example, the identification information indicating that the responder is the voice agent 21 may be included in a session description protocol (SDP) Answer packet included in the SIP 200 OK message. For example, a format of an SDP packet may be structured as shown in Table 1 below.

**Table 1**

| |
|---|
| v=o |
| o=sally 2890844526 2890844526 IN IP4 atlanta.com |
| s= |
| c=IN IP4 10.1.x.x/127 |
| t=0 0 |
| m=audio 49172 RTP/AVP 0 |
| a=rtpmap:0 PCMU/8000 |

v may indicate a version of the SDP protocol. For example, the SDP version in Table 1 may be 0. o may indicate an owner or creator who created an SDP message. For example, in o, username, session-ID, session version, network type, address type, and unicast address may be displayed in that order. s may indicate a session name. c may define an address of the media. For example, in c, network type, address type, and connection-address may be displayed in that order. t may indicate the time during which the session operates. For example, in t, the start time and the end time may be displayed. In addition, 't= 0 0' may mean a fixed session. m may indicate a media description. For example, in m, media name (e.g., audio, video, text, application, message) and transport address (e.g., port, protocol, format) may be displayed. For example, the port may indicate a transmission port through which the media is to be transmitted. For example, the format may indicate a format of the media, and a detailed description of each format may be displayed at a=. The a may indicate a media attribute. For example, in 'a=rtpmap: ', payload type and encoding name/clock rate may be displayed in that order. For example, referring to 'a=' in Table 1, format 0 is encoded with PCMU, and the clock rate may mean 8000.

In an embodiment, the external electronic device 20 may display the information indicating that the responder is the voice agent 21 in the username of field 'o' in the format of the SDP packet. For example, the external electronic device 20 may indicate that the responder of sally, which is the external electronic device 20, is the voice agent 21 by displaying 'o=sally-AI 2890844526 2890844526 IN IP4 atlanta.com'. For example, 'AI' in field 'o' may be the information indicating that the responder is the voice agent 21.

In an embodiment, when receiving a response to 'voice information associated with a task transmitted by the electronic device 10,' the electronic device 10 may identify whether the information indicating that the responder is the voice agent 21 is included in the response to the 'voice information associated with a task transmitted by the electronic device 10'. For example, the external electronic device 20 and the electronic device 10 may use the real-time transport protocol (RTP) when exchanging voice information. When transmitting the response to the 'voice information associated with a task transmitted by the electronic device 10', the external electronic device 20 may include identification information indicating that the responder is the voice agent in at least one of a header or payload of the RTP packet. If the identification information indicating that the responder is the voice agent 21 is included in at least one of the header or payload of the RTP packet, the electronic device 10 may determine that the responder is the voice agent 21.

In an embodiment, if the electronic device 10 receives a response from the external electronic device 20 through a separate channel, the electronic device 10 may identify whether the information indicating that the responder is the voice agent 21 is included in the response acquired through the separate channel described above. For example, the separate channel may include a channel for short-range wireless communication. For example, the electronic device 10 may perform short-range wireless communication with the external electronic device 20 based on ultra-wide band (UWB), Bluetooth, or near field communication (NFC). If the external electronic device 20 is capable of performing short-range wireless communication with the electronic device 10, the external electronic device 20 may inform that the responder is the voice agent 21 through short-distance wireless communication.

Alternatively, if the electronic device 10 is located nearby, the external electronic device 20 may inform that the responder is the voice agent 21 through nearby share. For example, if the electronic device 10 finds the external electronic device 20 by searching for a peripheral device for short-range wireless communication with the external electronic device 20, search information of the external electronic device 20 may be displayed as the voice agent 21. For example, the electronic device 10 may determine that the responder is the voice agent through account information or identification information of the voice agent 21 of the external electronic device 20.

In an embodiment, the external electronic device 20 may inform that the responder is the voice agent 21 by including pattern information in a response signal transmitted to the electronic device 10. For example, the pattern information may include frequency pattern information based on dual tone multiple frequency (DTMF). For example, the frequency pattern information may correspond to information indicating that the responder is the voice agent 21. The external electronic device 20 may transmit the frequency pattern information by including it in at least one of the first session initiation response, the response to the 'voice information associated with a task transmitted by the electronic device 10', or the response through the separate channel. Alternatively, if the responder switches to the voice agent 21 during voice call communication, the external electronic device 20 may transmit the frequency pattern information based on DTMF to the electronic device 10.

If the information indicating that the responder is the voice agent 21 is not included in the response (e.g., No in operation 720), in operation 730, the electronic device 10 may transmit information associated with the task through voice call communication. For example, if the responder is the user of the external electronic device 20, the electronic device 10 may perform the task by exchanging voice information with the external electronic device 20 through voice call communication.

If the information indicating that the responder is the voice agent 21 is included in the response (e.g., Yes in operation 720), in operation 740, the electronic device 10 may determine whether the size of information associated with the task is greater than or equal to a designated size in order to perform the task identified based on the user input. In an embodiment, the electronic device 10 may transmit data information including information associated with to the task to the external electronic device 20 in order to perform the task identified based on the user input. For example, when performing the task related to 'restaurant reservation,' the electronic device 10 may transmit data information including information required for reservation to the restaurant (e.g., external electronic devices 20). In this case, the electronic device 10 may determine whether or not the size of information required for reservation is greater than or equal to the designated size. For example, the designated size may correspond to the maximum size of data information capable of being transmitted using the real-time transport protocol (RTP).

If the size of the data information intended to be transmitted to the external electronic device 20 is smaller than the designated size (e.g., No in operation 740), in operation 730, the electronic device 10 may transmit data information to the external electronic device 20 through the first session. For example, if the size of the data information intended to be transmitted to the external electronic device 20 is small and thus can be transmitted using the RTP, the electronic device 10 may transmit the data information through the first session using the RTP. In addition, in FIG. 7, although it is illustrated that the data information is transmitted through voice call communication if the size of the data information intended to be transmitted to the external electronic device 20 is smaller than the designated size (e.g., No in operation 740), the electronic device 10 may also transmit the data information through data communication using the TCP.

If the size of the data information intended to be transmitted to the external electronic device 20 is greater than or equal to the designated size (e.g., Yes in operation 740), in operation 750, the electronic device 10 may request the external electronic device 20 to set up a second session for data communication. The connection procedure of the second session for data communication may correspond to a communication connection procedure using the transmission control protocol (TCP). If the electronic device 10 determines that the responder of the external electronic device 20 is the voice agent 21, the electronic device 10 may exchange data information by requesting the external electronic device 20 to set up the second session for data communication.

The electronic device 10 may use the RTP when performing voice call communication through the first session, while the electronic device 10 may use the transmission control protocol (TCP) when performing data communication through the second session. However, the electronic device 10 may also perform data communication through the first session. In this case, the electronic device 10 may perform data communication through the RTP.

In operation 760, the electronic device 10 may transmit data information associated with the task through data communication. In an example, the electronic device 10 may transmit data information to the external electronic device 20 through the second session for data communication. For example, if the size of data information intended to be transmitted to the external electronic device 20 is large and thus cannot be transmitted using the RTP, the electronic device 10 may transmit the data information through the second session using the TCP.

FIG. 8 is a diagram of an interface displayed when the voice agent of the electronic device requests the external electronic device to set up the first session for voice call communication, according to an embodiment of the disclosure.

Referring to FIGS. 2 and 8, the electronic device 10 may acquire user input from the user. For example, the user input may include at least one of voice input or touch input. In an embodiment, the voice agent 11 of the electronic device 10 may identify a task based on the user input. The voice agent 11 of the electronic device 10 may perform voice communication with the external electronic device (e.g., the external electronic device 20) in order to perform the identified task.

When the voice agent 11 of the electronic device 10 performs voice communication with the external electronic device 20, a first affordance 810 may be displayed on the display 281 of the electronic device 10. For example, the first affordance 810 may include an image indicating that it is the voice agent 11. When performing voice communication with the voice agent 11 of the electronic device 10, the external electronic device 20 may display a second affordance 820 on the display. For example, the second affordance 820 may include an image indicating that a counter party performing voice communication is the voice agent 11. The user of the external electronic device 20 may know that the responder of the electronic device 10 is the voice agent 11 through the second affordance 820.

The term "affordance" used herein may include a user-interactive graphical user interface (GUI) object that can be selectively displayed on the display screen of the electronic device (e.g., the electronic device 10 or external electronic device 20). For example, then affordance may include at least one of an image (e.g., an icon), a button, or text (e.g., a hyperlink).

FIG. 9 is a flowchart in which the electronic device sets up the first session for voice call communication with the external electronic device, according to an embodiment of the disclosure.

Referring to FIG. 9, the electronic device 10 may use the session initiation protocol (SIP) and/or session description protocol (SDP) in order to initiate the first session for voice call communication with the external electronic device 20. The SIP may refer to a protocol for setting up a session, and the SDP may refer to a protocol for negotiating media types and/or formats related to multimedia sessions between terminals. For example, the session may correspond to a dialogue for voice calls and data transmission. In an embodiment, the electronic device 10 may perform a negotiation procedure for establishing the session for a media service (e.g., video call and/or voice call services) with the external electronic device 20 based on the SIP and/or SDP.

In operation 910, the electronic device 10 may transmit a SIP INVITE message, which is a request for setup of the first session, to the external electronic device 20. The SIP INVITE message may refer to a message requesting the external electronic device 20 to establish the first session for voice call communication. For example, the SIP INVITE message may refer to a message to announce the start of a service-related session, such as a voice call, data transmission, and so on, to invite a user. SDP Offer may be included in the SIP INVITE message. For example, at the moment when the electronic device 10 makes a call to the external electronic device 20, the electronic device 10 may transmit the SIP INVITE message including the SDP offer to the external electronic device 20.

In operation 920, the electronic device 10 may receive the SIP 200 OK message (e.g., the first session initiation response of FIGS. 2 to 7), which is a response message to the SIP INVITE message, from the external electronic device 20. SDP Answer may be included in the SIP 200 OK message. For example, at the moment when the external electronic device 20 connects the phone call of the electronic device 10, the electronic device 10 may receive the SIP 200 OK message including the SDP Answer from the external electronic device 20.

In operation 930, if the SIP 200 OK message is received, the electronic device 10 may transmit an SIP ACK message to the external electronic device 20. Based on transmission of the SIP ACK message, the first session for voice call communication may be established between the electronic device 10 and the external electronic device 20. For example, the electronic device 10 may exchange data with the external electronic device 20 through the first session established based on the RTP.

FIG. 10 is a block diagram illustrating an electronic device 1001 in a network environment 1000 according to an embodiment of the disclosure. Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module (SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to an embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may acquire the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

FIG. 11 is a block diagram illustrating an integrated intelligence system according to an embodiment of the disclosure.

Referring to FIG. 11, the integrated intelligence system of an embodiment may include a user terminal 1101, an intelligent server 1200, and a service server 1300.

The user terminal 1101 of an embodiment (e.g., the electronic device 1001 of FIG. 10) may be a terminal device (or, an electronic device) capable of connecting to the Internet, for example, a mobile phone, smartphone, personal digital assistant (PDA), laptop computer, television (TV), white goods, wearable device, head mounted device (HMD), or smart speaker.

According to the illustrated embodiment, the user terminal 1101 may include a communication interface 1190, a microphone 1170, a speaker 1155, a display 1160, memory 1130, and/or a processor 1120. The components listed above may be operatively or electrically connected to each other.

The communication interface 1190 (e.g., the communication module 1090 of FIG. 10) may be configured to exchange data with an external apparatus by being connected thereto. The microphone 1170 (e.g., the audio module 1070 of FIG. 10) may convert sound (e.g., user utterance) into an electrical signal by receiving the sound. The speaker 1155 (e.g., the sound output module 1055 of FIG. 10) may output an electrical signal as sound (e.g., voice). The display 1160 (e.g., the display module 1060 of FIG. 10) may be configured to display an image or video. The display 1160 of an embodiment may also display a graphical user interface (GUI) of an app (or, application program) being executed.

The memory 1130 of an embodiment (e.g., the memory 1030 of FIG. 10) may store a client module 1131, a software development kit (SDK) 1133, and a plurality of applications. The client module 1131 and SDK 1133 may configure a framework (or solution program) for performing general-purpose functions. In addition, the client module 1131 or SDK 1133 may configure a framework for processing voice input.

The plurality of applications (e.g., 1135a and 1135b) may be programs for performing designated functions. According to an embodiment, the plurality of applications may include the first app 1135a and/or the second app 1135b. According to an embodiment, each of the plurality of applications may include a plurality of actions for performing the designated function. For example, the applications may include an alarm app, a message app, and/or a schedule app. According to an embodiment, the plurality of applications may sequentially execute at least some of the plurality of actions by being executed by the processor 1120.

The processor 1120 of an embodiment may control the overall action of the user terminal 1101. For example, the processor 1120 may perform a designated action by being electrically connected to the communication interface 1190, the microphone 1170, the speaker 1155, and the display 1160. For example, the processor 1120 may include at least one processor.

The processor 1120 of an embodiment may also perform the designated function by executing a program stored in the memory 1130. For example, the processor 1120 may perform the following actions for processing voice input by executing at least one of the client module 1131 or the SDK 1133. The processor 1120 may control the action of the plurality of applications through, for example, the SDK 1133. The following actions described as actions of the client module 1131 or SDK 1133 may be actions performed by the execution of the processor 1120.

The client module 1131 of an embodiment may receive voice input. For example, the client module 1131 may receive a voice signal corresponding to user utterance detected through the microphone 1170. The client module 1131 may transmit the received voice input (e.g., voice signal) to the intelligent server 1200. The client module 1131 may transmit state information of the user terminal 1101 to the intelligent server 1200 along with the received voice input. The state information may be, for example, execution state information of the app.

The client module 1131 of an embodiment may receive a result corresponding to the received voice input from the intelligent server 1200. For example, if a result corresponding to the received voice input may be calculated in the intelligent server 1200, the client module 1131 may receive the result corresponding to the received voice input. The client module 1131 may display the received result on the display 1160.

The client module 1131 of an embodiment may receive a plan corresponding to the received voice input. The client module 1131 may display the results obtained by executing a plurality of actions of the app according to the plan on the display 1160. For example, the client module 1131 may sequentially display execution results of the plurality of actions on the display. For another example, the user terminal 1101 may display only some of the results obtained by executing the plurality of actions (e.g., the result of the last action) on the display.

According to an embodiment, the client module 1131 may receive, from the intelligent server 1200, a request for acquiring information required to calculate a result corresponding to the voice input. According to an embodiment, the client module 1131 may transmit the required information to the intelligent server 1200 in response to the request.

The client module 1131 of an embodiment may transmit information of a result obtained by executing the plurality of actions according to the plan to the intelligent server 1200. The intelligent server 1200 may check that the received voice input has been processed correctly by using the result information.

The client module 1131 of an embodiment may include a voice recognition module. According to an embodiment, the client module 1131 may recognize voice input that performs a limited function through the voice recognition module. For example, the client module 1131 may execute an intelligent app for processing the voice input by performing closely coordinated actions in response to designated voice input (e.g., wake up!).

The intelligent server 1200 of an embodiment may receive information related to the voice input of the user from the user terminal 1101 through the network 1199 (e.g., the first network 1098 and/or second network 1099 of FIG. 10). According to an embodiment, the intelligent server 1200 may change data related to the received voice input into text data. According to an embodiment, the intelligent server 1200 may generate, based on the text data, at least one plan for performing a task corresponding to the voice input of the user.

According to an embodiment, the plan may be generated by an artificial intelligence (AI) system. The artificial intelligence system may be a rule-based system or a neural network-based system (e.g., feedforward neural network (FNN), and/or recurrent neural network (RNN)). Alternatively, the artificial intelligence system may be a combination of the systems described above or a different artificial intelligence system. According to an embodiment, the plan may be selected from a set of predefined plans or may be generated in real time in response to a user request. For example, the artificial intelligence system may select at least one plan from a plurality of predefined plans.

The intelligent server 1200 of an embodiment may transmit a result according to the generated plan to the user terminal 1101 or transmit the generated plan to the user terminal 1101. According to an embodiment, the user terminal 1101 may display a result according to the plan on the display 1160. According to an embodiment, the user terminal 1101 may display a result obtained by executing the action according to the plan on the display 1160.

The intelligent server 1200 of an embodiment may include a front end 1210, a natural language platform 1220, a capsule database 1230, an execution engine 1240, an end user interface 1250, a management platform 1260, and a big data platform 1270, or an analytic platform 1280.

The front end 1210 of an embodiment may receive the voice input, which is received by the user terminal 1101, from the user terminal 1101. The front end 1210 may transmit a response corresponding to the voice input to the user terminal 1101.

According to an embodiment, the natural language platform 1220 may include an automatic speech recognition module (ASR module) 1221, a natural language understanding module (NLU module) 1223, a planner module 1225, and a natural language generator module (NLG module) 1227, and/or a text to speech module (TTS module) 1229.

The automatic voice recognition module 1221 of an embodiment may convert voice input received from the user terminal 1101 into text data. The natural language understanding module 1223 of an embodiment may determine the intent of the user using the text data of voice input. For example, the natural language understanding module 1223 may determine the intent of the user by performing syntactic analysis and/or semantic analysis. The natural language understanding module 1223 of an embodiment may grasp a meaning of a word extracted from the voice input using linguistic features (e.g., grammatical elements) of a morpheme or phrase, and determine the intent of the user by matching the meaning of the grasped word to the intent.

The planner module 1225 of an embodiment may generate a plan using the intent determined by the natural language understanding module 1223 and parameters. According to an embodiment, the planner module 1225 may determine a plurality of domains required to perform the task, based on the determined intent. The planner module 1225 may determine a plurality of actions included in each of the plurality of domains determined based on the intent. According to an embodiment, the planner module 1225 may determine parameters required to execute the determined plurality of actions or result values output by the execution of the plurality of actions. The parameters and the result values may be defined as concepts of a specified type (or class). Accordingly, the plan may include a plurality of actions and/or determined by the intent of the user and/or a plurality of concepts. The planner module 1225 may determine a relationship between the plurality of actions and the plurality of concepts in a stepwise (or hierarchical) manner. For example, the planner module 1225 may determine an execution order of the plurality of actions, which are determined based on the intent of the user, based on the plurality of concepts. In other words, the planner module 1225 may determine the execution order of the plurality of actions based on the parameters required for execution of the plurality of actions and the results output by the execution of the plurality of actions. Accordingly, the planner module 1225 may generate a plan in which association information (e.g., ontology) between the plurality of actions and the plurality of concepts is included. The planner module 1225 may generate the plan using information stored in the capsule database 1230 in which a set of relationships between concepts and actions is stored.

The natural language generator module 1227 of an embodiment may change designated information into a text form. The information changed to the text form may be in the form of natural language utterances. The text to speech module 1229 of an embodiment may change information in text form into information in voice form.

According to an embodiment, some or all of the functions of the natural language platform 1220 may also be implemented in the user terminal 1101. For example, the user terminal 1101 may include the automatic speech recognition module and/or the natural language understanding module. After recognizing the voice input of the user, the user terminal 1101 may transmit data information corresponding to the recognized voice input to the intelligent server 1200. For example, the user terminal 1101 may include the text to speech module. The user terminal 1101 may receive data information from the intelligent server 1200 and output the received data information as voice.

The capsule database 1230 may store information about the relationship between the plurality of concepts and actions corresponding to a plurality of domains. The capsule according to one embodiment may include a plurality of action objects (or action information) and/or concept objects (or concept information) included in the plan. According to an embodiment, the capsule database 1230 may store a plurality of capsules in the form of a concept action network (CAN). According to an embodiment, the plurality of capsules may be stored in a function registry included in the capsule database 1230.

The capsule database 1230 may include a strategy registry in which strategy information required when determining the plan corresponding to voice input is stored. The strategy information may include standard information for determining one plan if there are a plurality of plans corresponding to the voice input. According to an embodiment, the capsule database 1230 may include a follow up registry in which information on follow-up actions for suggesting the follow-up actions to the user in a designated situation is stored. The follow-up actions may include, for example, follow-up utterances. According to an embodiment, the capsule database 1230 may include a layout registry that stores layout information of information output through the user terminal 1101. According to an embodiment, the capsule database 1230 may include a vocabulary registry in which vocabulary information included in capsule information is stored. According to an embodiment, the capsule database 1230 may include a dialog registry in which information about dialog (or interaction) with the user is stored. The capsule database 1230 may update a stored object through a developer tool. The developer tool may include, for example, a function editor for updating the action object or the concept object. The developer tool may include a vocabulary editor for updating the vocabulary. The developer tool may include a strategy editor that generates and registers a strategy for determining the plan. The developer tool may include a dialog editor that generates a dialogue with the user. The developer tool may include a follow up editor capable of activating a follow-up goal and editing the follow-up utterances that provides a hint. The follow-up goal may be determined based on the currently set goal, user preference, or environmental condition. In an embodiment, the capsule database 1230 may also be implemented within the user terminal 1101.

The execution engine 1240 of an embodiment may calculate a result using the generated plan. The end user interface 1250 may transmit the calculated result to the user terminal 1101. Accordingly, the user terminal 1101 may receive the result and provide the received result to the user. The management platform 1260 of an embodiment may manage information used in the intelligent server 1200. The big data platform 1270 of an embodiment may collect user data. The analytic platform 1280 of an embodiment may manage quality of service (QoS) of the intelligent server 1200. For example, the analytic platform 1280 may manage the components and processing speed (or efficiency) of the intelligent server 1200.

The service server 1300 of an embodiment may provide a designated service (e.g., food ordering or hotel reservation) to the user terminal 1101. According to an embodiment, the service server 1300 may be a server operated by a third party. The service server 1300 of an embodiment may provide information for generating the plan corresponding to the received voice input to the intelligent server 1200. The provided information may be stored in the capsule database 1230. In addition, the service server 1300 may provide result information according to the plan to the intelligent server 1200. The service server 1300 may communicate with the intelligent server 1200 and/or the user terminal 1101 through a network 1199. The service server 1300 may communicate with the intelligent server 1200 through a separate connection. Although the service server 1300 is illustrated as a single server in FIG. 11, embodiments of this document are not limited thereto. At least one of the services 1301, 1302, and 1303 of the service server 1300 may be implemented by a separate server.

In the integrated intelligence system described above, the user terminal 1101 may provide various intelligent services to the user in response to user input. The user input may include, for example, input through a physical button, touch input, or voice input.

In an embodiment, the user terminal 1101 may provide a voice recognition service through an internally stored intelligent app (or voice recognition app). In this case, for example, the user terminal 1101 may recognize the user utterance or voice input received through the microphone 1170 and provide a service corresponding to the recognized voice input to the user.

In an embodiment, the user terminal 1101 may perform a designated action alone or together with the intelligent server 1200 and/or the service server 1300, based on the received voice input. For example, the user terminal 1101 may execute an app corresponding to the received voice input and perform the designated action through the executed app.

In an embodiment, if the user terminal 1101 provides a service together with the intelligent server 1200 and/or the service server 1300, the user terminal 1101 may detect the user utterance using the microphone 1170 and generate a signal (or voice data) corresponding to the detected user utterance. The user terminal 1101 may transmit the voice data to the intelligent server 1200 using the communication interface 1190.

The intelligent server 1200 according to one embodiment may generate a plan for performing the task corresponding to voice input or a result obtained by performing an action according to the plan, as a response to the voice input received from the user terminal 1101. For example, the plan may include a plurality of actions for performing the task corresponding to voice input of the user and/or a plurality of concepts related to the plurality of actions. The concept may be one that defines parameters input in the execution of the plurality of actions or result values output by the execution of the plurality of actions. The plan may include association information between the plurality of actions and/or the plurality of concepts.

The user terminal 1101 of an embodiment may receive the response using the communication interface 1190. The user terminal 1101 may output the voice signal generated within the user terminal 1101 to the outside using the speaker 1155, or output an image generated within the user terminal 1101 to the outside using the display 1160.

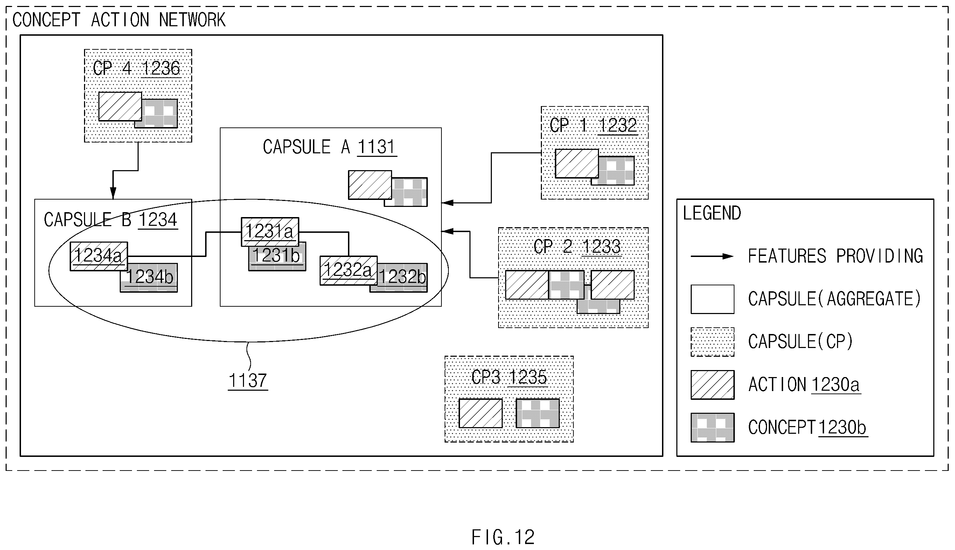

FIG. 12 is a diagram illustrating a form in which relationship information between the concepts and the actions is stored in a database, according to an embodiment of the disclosure.

The capsule database (e.g., capsule database 1230) of the intelligent server 1200 may store capsules in the form of the concept action network (CAN). The capsule database may store actions for processing the task corresponding to the voice input of the user and parameters required for the actions in the form of the concept action network (CAN).

The capsule database may store a plurality of capsules (capsule A 1231 and capsule B 1234) corresponding to a plurality of domains (e.g., applications), respectively. According to an embodiment, one capsule (e.g., capsule A 1231) may correspond to one domain (e.g., location (geo) or application). In addition, one capsule may correspond the capsule (e.g., CP1 1232, CP2 1233, CP3 1235, and/or CP4 1236) of at least one service provider for performing the function for the domain related to the capsule. According to an embodiment, one capsule may include at least one action 1230a and at least one concept 1230b for performing a designated function.

The natural language platform 1220 may generate the plan for performing the task corresponding to the received voice input using the capsule stored in the capsule database 1230. For example, the planner module 1225 of the natural language platform may generate the plan using the capsules stored in the capsule database. For example, a plan 1137 may be generated using actions 1231a and 1232a and concepts 1231b and 1232b of capsule A 1231 and action 1234a and concept 1234b of capsule B 1234.

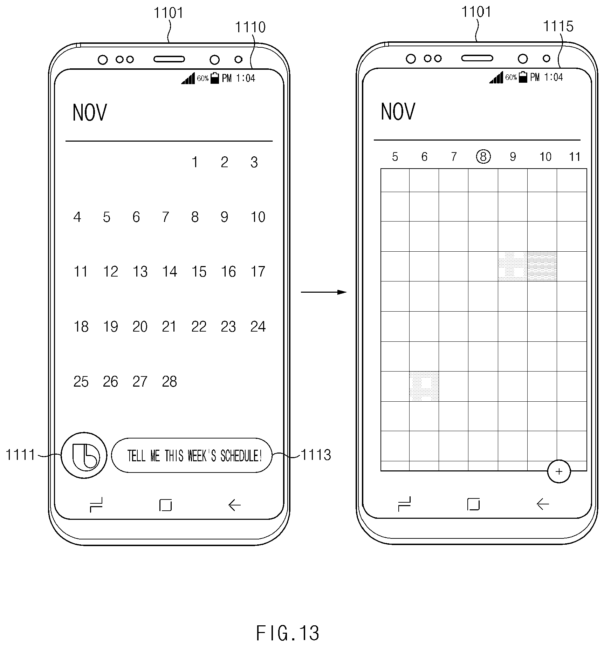

FIG. 13 is a diagram illustrating a screen on which the user terminal processes voice input received through the intelligent app according to an embodiment of the disclosure.

The user terminal 1101 may execute the intelligent app in order to process user input through the intelligent server 1200.

According to an embodiment, in a first screen 1110, if the user terminal 1101 recognizes a designated voice input (e.g., wake up!) or receives an input through a hardware key (e.g., dedicated hardware key), the user terminal 1101 may execute the intelligent app for processing the voice input. For example, the user terminal 1101 may execute the intelligent app while executing a schedule app. According to an embodiment, the user terminal 1101 may display an object 1111(e.g., icon) corresponding to the intelligent app on the display 1160. According to an embodiment, the user terminal 1101 may receive the voice input by user utterance. For example, the user terminal 1101 may receive the voice input of "Tell me this week's schedule!". According to an embodiment, the user terminal 1101 may display a user interface (UI) (e.g., input window) 1113 of the intelligent app on which text data of the received voice input is displayed.

According to an embodiment, in a second screen 1115, the user terminal 1101 may display a result corresponding to the received voice input on the display. For example, the user terminal 1101 may receive a plan corresponding to the received user input and display 'this week's schedule' on the display according to the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device individually or collectively, cause the electronic device to perform a method of the disclosure.

Any such software may be stored in the form of volatile or non-volatile storage such as, for example, a storage device like read only memory (ROM), whether erasable or rewritable or not, or in the form of memory such as, for example, random access memory (RAM), memory chips, device or integrated circuits or on an optically or magnetically readable medium such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An electronic device comprising:
a communication circuit;
memory storing instructions; and
at least one processor electrically connected to the communication circuit and the memory,
wherein the instructions, when executed by the at least one processor individually or collectively, cause the electronic device to:
acquire a user input,
identify a task based on the user input,
transmit a request to establish a first session for a voice call to an external electronic device in order to perform the task,
receive a response from the external electronic device,
determine, based on the response, whether a responder of the voice call is a voice agent based on machine learning, and
transmit, based on the determination that the responder is the voice agent, data information including information associated with the task to the external electronic device.

2. The electronic device of claim 1, wherein the instructions, when executed by the at least one processor individually or collectively, cause the electronic device to:
determine that the responder is the voice agent if information indicating that the responder is the voice agent is included in the response.

3. The electronic device of claim 2,
wherein the information indicating that the responder is the voice agent includes at least one of identification information or pattern information.

4. The electronic device of claim 3,
wherein the identification information is included in a session description protocol (SDP) packet.

5. The electronic device of claim 3,
wherein the pattern information includes frequency pattern information based on dual tone multiple frequency (DTMF).

6. The electronic device of claim 1, wherein the instructions, when executed by the at least one processor individually or collectively, cause the electronic device to:
transmit a request to establish a second session for data communication to the external electronic device.

7. The electronic device of claim 6, wherein the instructions, when executed by the at least one processor individually or collectively, cause the electronic device to:
transmit the request to establish the second session if a size of the data information is greater than or equal to a specified size.

8. The electronic device of claim 6, wherein the instructions, when executed by the at least one processor individually or collectively, cause the electronic device to:
transmit the data information through the first session if a size of the data information is less than a specified size.

9. The electronic device of claim 1,
wherein the response includes at least one of a response to the request to establish the first session, a response to voice information associated with the task transmitted by the electronic device, or a response acquired through a separate communication channel.

10. The electronic device of claim 9,
wherein the separate communication channel includes a short-range wireless communication channel.

11. The electronic device of claim 1, wherein the instructions, when executed by the at least one processor individually or collectively, cause the electronic device to:
provide, based on the determination that the responder is the voice agent, information indicating that the responder is the voice agent.

12. The electronic device of claim 11, further comprising:
a display,
wherein the instructions, when executed by the at least one processor individually or collectively, cause the electronic device to:
provide the information by displaying a user interface (UI) on the display.

13. The electronic device of claim 1,
wherein the request includes information indicating that a requester of the request to establish the first session is a voice agent.

14. A method performed by an electronic device, the method comprising:
acquiring a user input;
identifying a task based on the user input;
transmitting a request to establish a first session for a voice call to an external electronic device in order to perform the task;
receiving a response from the external electronic device;
determining, based on the response, whether a responder of the voice call is a voice agent based on machine learning; and
transmitting, based on the determination that the responder is the voice agent, data information including information associated with the task to the external electronic device.

15. The method of claim 14, further comprising:
determining that the responder is the voice agent if information indicating that the responder is the voice agent is included in the response.
